(19) Europäisches Patentamt
European Patent Office
Office européen des brevets

(11) **EP 2 238 336 B1**

(12) **EUROPEAN PATENT SPECIFICATION**

(45) Date of publication and mention
of the grant of the patent:
**09.05.2012 Bulletin 2012/19**

(51) Int Cl.:
*F02M 25/07* *(2006.01)*     *F02M 25/10* *(2006.01)*

(21) Application number: **09703417.7**

(22) Date of filing: **15.01.2009**

(86) International application number:
**PCT/IB2009/000060**

(87) International publication number:
**WO 2009/093114 (30.07.2009 Gazette 2009/31)**

(54) **EXHAUST GAS CONTROL APPARATUS FOR INTERNAL COMBUSTION ENGINE**

ABGASENTGIFTUNGSVORRICHTUNG FÜR EINEN VERBRENNUNGSMOTOR

APPAREIL DE COMMANDE DE GAZ D'ÉCHAPPEMENT POUR MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.01.2008 JP 2008012591**

(43) Date of publication of application:
**13.10.2010 Bulletin 2010/41**

(73) Proprietor: **Toyota Jidosha Kabushiki Kaisha Toyota-shi, Aichi-ken 471-8571 (JP)**

(72) Inventors:
• **KATOH, Kenji**
  **Toyota-shi**
  **Aichi-ken 471-8571 (JP)**
• **KOJIMA, Susumu**
  **Toyota-shi**
  **Aichi-ken 471-8571 (JP)**

(74) Representative: **TBK**
  **Bavariaring 4-6**
  **80336 München (DE)**

(56) References cited:
**JP-A- 2001 323 829     JP-A- 2007 120 397**

**Description**

BACKGROUND OF THE INVENTION

1. Field of the Invention

The invention relates to an exhaust gas control apparatus for an internal combustion engine.

2. Description of the Related Art

An internal combustion engine is known in which an exhaust passage is connected to an intake passage downstream of a throttle valve via an exhaust gas recirculation (EGR) passage such that EGR gas can be supplied into the intake passage.

However, this EGR gas contains particulate matter (PM) of solid carbon, for example, and this particulate matter adheres to and accumulates on the inside wall surfaces of the EGR passage and the intake passage, and the intake valves. As a result, the amount of EGR gas or fresh air may deviate from the normal amount.

Therefore, Japanese Patent Application Publication No. 2007-1203971 (JP 2007-120397A), for example, shows an apparatus as in the preamble of claim 1 and describes an internal combustion engine which supplies ozone into the EGR passage to oxidize the particulate matter, thereby removing it. In this internal combustion engine, ozone is supplied either while the internal combustion engine is idling or immediately after the internal combustion engine has stopped when the amount of particulate matter accumulated on, for example, an EGR control valve arranged in the EGR passage exceeds an allowable amount.

Typically, EGR gas is not supplied while the internal combustion engine is idling or immediately after the internal combustion engine has stopped. Therefore, in the internal combustion engine described above, the ozone is supplied while EGR gas is not being supplied. However, when EGR gas is not being supplied it is difficult to supply ozone thoroughly throughout the EGR passage or the intake passage, which makes it difficult to reliably oxidize and remove the particulate matter.

SUMMARY OF THE INVENTION

The object of the invention is to improve an exhaust gas control apparatus.

This object is solved by an exhaust gas control apparatus having the features of claim 1. An alternative exhaust gas control apparatus is stated in claim 2.

Further advantageous developments are stated in the dependent claims.

The invention thus relates to an internal combustion engine which is provided an exhaust gas recirculation passage that connects an exhaust passage to an intake passage downstream of a throttle valve, and an exhaust gas recirculation control valve which is arranged inside the exhaust gas recirculation passage and controls the amount of exhaust gas recirculation gas that flows into the exhaust gas recirculation passage. This internal combustion engine is also provided with an exhaust gas control apparatus that includes ozone supplying means for supplying ozone into the exhaust gas recirculation passage to oxidize and remove particulate matter, and ozone supply controlling means for controlling an ozone supply operation performed by the ozone supplying means. In this exhaust gas control apparatus, the ozone supply controlling means controls the ozone supplying means to perform the ozone supply operation when an exhaust gas recirculation gas supply operation is being performed and the temperature of an ozone supply destination of the ozone supplying means is within a set temperature range that is set in advance. The ozone supply controlling means may also prohibit the ozone supply operation from being performed when i) the exhaust gas recirculation gas supply operation is not being performed, or ii) the temperature of the ozone supply destination of the ozone supplying means is outside of the set temperature range.

Accordingly, particulate matter in the EGR gas can be reliably oxidized and removed.

BRIEF DESCRIPTION OF THE DRAWINGS

The foregoing and further objects, features and advantages of the invention will become apparent from the following description of embodiments with reference to the accompanying drawings, wherein like numerals are used to represent like elements and wherein:

FIG. 1 is an overall view of an internal combustion engine to which an exhaust gas control apparatus according to a first example embodiment of the invention has been applied;

FIG. 2 is a map showing a region in which an EGR gas supply operation is performed and a region in which the EGR gas supply operation is not performed;

FIG 3 is a time chart illustrating an ozone supply operation according to the first example embodiment of the invention;

FIG 4 is a flowchart illustrating an ozone supply control routine according to the first example embodiment of the invention;

FIG 5 is an overall view of an internal combustion engine to which an exhaust gas control apparatus according to a modified embodiment of the first example embodiment has been applied;

FIG 6 is an overall view of an internal combustion engine to which an exhaust gas control apparatus according to another modified example of the first example embodiment has been applied;

FIG. 7 is an overall view of an internal combustion engine to which an exhaust gas control apparatus according to a second example embodiment of the invention has been applied;

FIG. 8 is a flowchart illustrating an ozone supply control routine according to the second example embodiment of the invention;

FIG 9 is a time chart illustrating an ozone supply operation according to a third example embodiment of the invention;

FIG 10 is a flowchart illustrating an ozone supply control routine according to the third example embodiment of the invention;

FIG 11 is a map showing the relationship between an ozone supply amount and an EGR gas supply amount;

FIG 12 is a map showing the relationship between the ozone supply amount and an engine coolant temperature;

FIG. 13 is a map showing the relationship between the ozone supply amount and a valve overlap amount;

FIG. 14 is a map showing the relationship between an ozone concentration and an engine load ratio;

FIG. 15 is a map showing the relationship between a correction coefficient and an air amount;

FIG. 16 is a flowchart illustrating a routing for calculating a throttle opening amount;

FIG. 17 is an overall view of an internal combustion engine to which an exhaust gas control apparatus according to a modified example of the second example embodiment has been applied.

FIG. 18 is a time chart illustrating passage length control according to the modified example of the second example embodiment; and

FIG 19 is a flowchart illustrating a passage length control routine according to the modified example of the second example embodiment.

DETAILED DESCRIPTION OF THE EMBODIMENTS

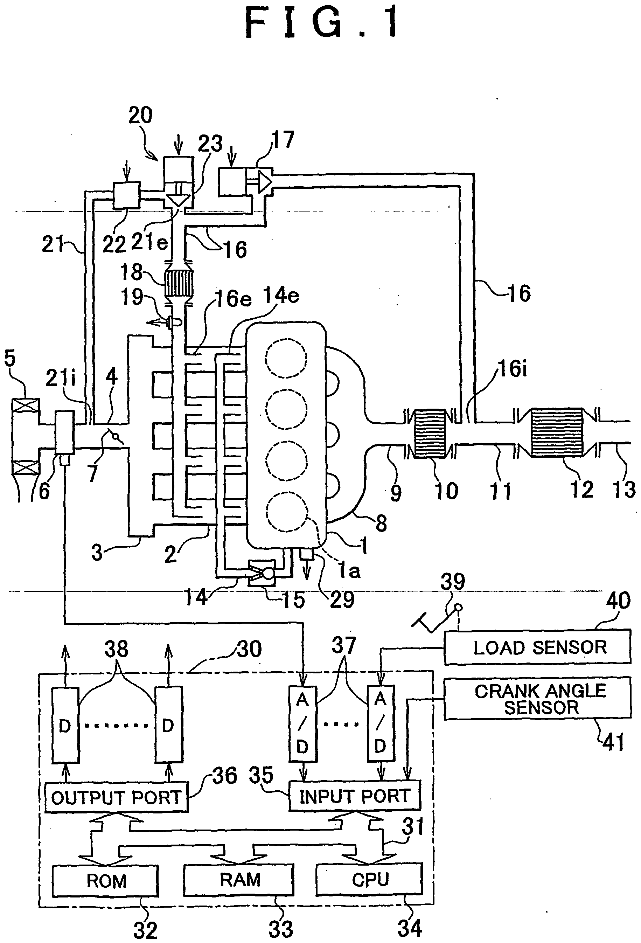

FIG. 1 is a view showing a case in which a first example embodiment of the invention is applied to a compression ignition internal combustion engine, though the example embodiment may also be applied to a spark ignition internal combustion engine.

Referring to FIG. 1, an engine main body 1 has, for example, four cylinders 1a. Each cylinder 1a is connected to a surge tank 3 via a corresponding intake branch pipe 2. The surge tank 3 is connected to an air cleaner 5 via an intake duct 4. An airflow meter 6 that generates an output voltage proportional to the intake air amount, as well as a throttle valve 7 that is driven by a step motor, not shown, are arranged in the intake duct 4. Each cylinder 1a is also connected to an auxiliary catalyst 10 that has an oxidative function via an exhaust manifold 8 and an exhaust pipe 9. This auxiliary catalyst 10 is connected to a main catalyst 12 via an exhaust pipe 11, and the main catalyst 12 is connected to an exhaust pipe 13. The auxiliary catalyst 10 is a small capacity catalyst and is arranged adjacent to the engine main body 1. The main catalyst 12 is a large capacity catalyst and is arranged under the vehicle floorboard.

A blow-by gas ventilation passage 14 is connected to the inside of the crankcase, for example, of the engine main body 1. The blow-by gas ventilation passage 14 branches off into four outflow ends 14e, each of which is connected to a corresponding intake branch pipe 2. A check valve 15 that allows-blow-by gas to only flow from the engine main body 1 toward the intake branch pipes 2 is arranged in the blow-by gas ventilation passage 14.

Further, an exhaust gas recirculation (hereinafter also referred to as "EGR") passage 16 is provided. An inflow end 16i of this EGR passage 16 is connected to the exhaust pipe 11. The EGR passage 16 branches off into four outflow ends 16e, each of which is connected to a corresponding intake branch pipe 2. In this case, the outflow ends 16e of the EGR passage 16 are connected to the intake branch pipes 2 upstream of the outflow ends 14e of the blow-by gas ventilation passage 14. An electromagnetically-driven EGR control valve 17 is arranged in the EGR passage 16, and an EGR catalyst 18 which has an oxidative function is arranged in the EGR passage 16 downstream of the EGR control valve 17. Moreover, a temperature sensor 19 for detecting the temperature of the EGR gas that flows out from the EGR catalyst 18 is arranged in the EGR passage 16 downstream of the EGR catalyst 18. The temperature of the EGR gas that flows out from the EGR catalyst 18 indicates the temperature of the EGR catalyst 18.

Furthermore, in this example embodiment of the invention, an ozone supply apparatus 20 is provided for supplying ozone. The ozone supply apparatus 20 has an air passage 21 that is connected to an air supply. A discharge type ozone generator 22 and an electromagnetically-driven air control valve 23 are arranged in the air passage 21. An inflow end 21i of the air passage 21 is connected to the intake duct 4 upstream of the throttle valve 7. Accordingly, in the example shown in FIG. 1, the air supply is formed of the air duct 4 upstream of the throttle valve 7. Meanwhile, the air passage 21 or a supply end 21e of the ozone supply apparatus 20 is connected to the EGR passage 16 between the EGR control valve 17 and the EGR catalyst 18. The ozone generator 22 produces ozone from the oxygen in the air by discharging electricity into the air inside the air passage 21. Also, the air control valve 23 controls the amount of air that flows through the air passage 21. Incidentally, the ozone generator 22 may also be arranged in the EGR passage 16 downstream of the outflow end 21e, and ozone may be produced by the ozone generator 22 while air from the air passage 21 is supplied into the EGR passage 16. However, unlike the EGR passage 16 through which both air and EGR gas flow, only air flows through the air passage 21 so the oxygen concentration in the gas is high. Therefore, arranging the ozone generator 22 in the air passage 21 facilitates the production of ozone.

An electronic control unit (ECU) 30 is made up of a digital computer which includes ROM (read only memory) 32, RAM (random access memory) 33, a CPU (i.e., a microprocessor) 34, an input port 35, and an output port 36, all of which are connected together by a bidirectional bus 31. A coolant temperature sensor 29 that generates an output voltage proportional to the engine coolant temperature THW indicative of the engine temperature is mounted to the engine main body 1. Output voltages from the airflow meter 6, the temperature sensor 19, and the coolant temperature sensor 29 are all input to the input port 35 via corresponding AD converters 37. Also, a load sensor 40 that generates an output voltage proportional to a depression amount of an accelerator pedal 39 is connected to the accelerator pedal 39, and the output voltage of this load sensor 40 is input to the input port 35 via a corresponding AD converter 37. Further, a crank angle sensor 41 that generates an output pulse every time a crankshaft rotates 30°, for example, is connected to the input port 35. The engine speed Ne is calculated in the CPU 34 based on the output pulse from the crank angle sensor 41. Meanwhile, the output port 36 is connected to the step motor for driving the throttle valve 7, the EGR control valve 17, the ozone generator 22, and the air control valve 23 via corresponding drive circuits 38 such that the ECU 30 is able to control each of those devices.

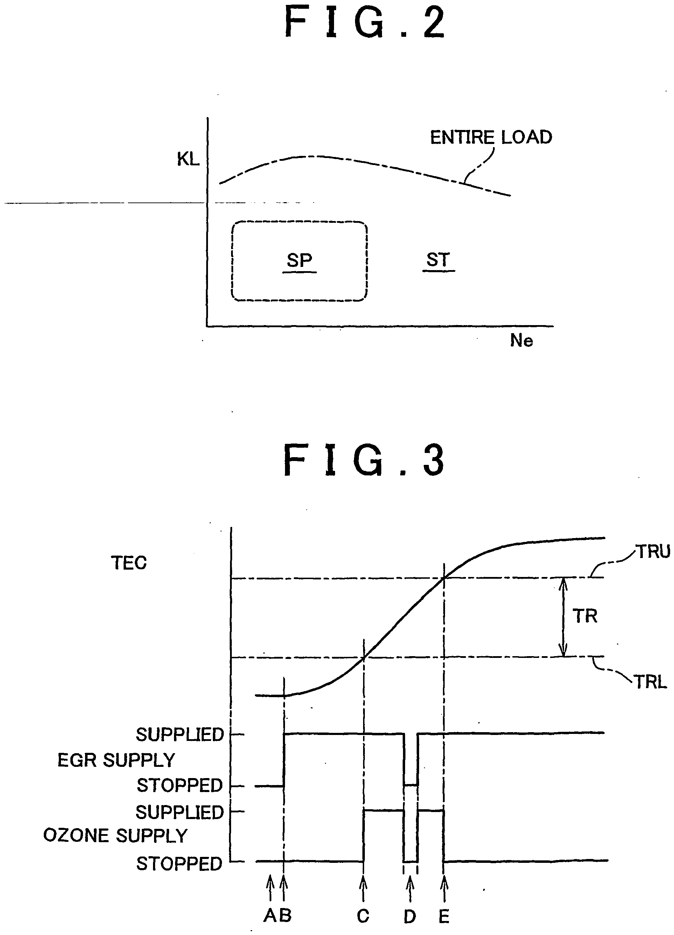

In this example embodiment of the invention, an EGR gas supply operation is controlled based on the engine operating state, e.g., the engine load ratio KL and the engine speed Ne. That is, when the engine operating state is within the region SP outlined by the broken line in FIG 2, for example, the EGR gas supply operation is performed, and when the engine operating state is within the region ST which is the region around the region SP, the EGR gas supply operation is not performed. Incidentally, the engine load ratio KL refers to the ratio of engine load to the entire load.

When the EGR gas supply operation is performed, EGR gas flows into the intake branch pipes 2 via the EGR passage 16 and is then drawn into the cylinder 1a along with fresh air. In this case, particulate matter in the EGR gas is oxidized and removed along with unburned HC and CO in the EGR catalyst 18.

However, when the temperature of the EGR catalyst 18 is low, for example, it is difficult to oxidize and remove particulate matter in the EGR catalyst 18.

Therefore, in this example embodiment of the invention, when the EGR gas supply operation is performed, ozone is supplied into the EGR passage 16 from the ozone supply apparatus 20, and this ozone is used to oxidize and remove the particulate matter. That is, ozone supplied into the EGR passage 16 is carried throughout the EGR passage 16 by the flow of EGR gas and oxidizes and removes the particulate matter in the EGR gas or the EGR catalyst 18 at this time.

However, when the EGR catalyst temperature is below the activation temperature of the EGR catalyst 18 in the presence of ozone (i.e., approximately 100°C to 200°C), particulate matter in the EGR catalyst 18 is unable to be sufficiently oxidized and removed. Therefore, even if an ozone supply operation is performed at this time, the ozone is unable to be effectively used to oxidize and remove the particulate matter. Also, when the EGR catalyst temperature is above the activation temperature of the EGR catalyst 18 not in the presence of ozone (i.e., approximately 250°C to 300°C), particulate matter in the EGR catalyst 18 is able to be sufficiently oxidized and removed even without performing the ozone supply operation.

Therefore, in this example embodiment of the invention, a set temperature range, in which an activation temperature of the EGR catalyst 18 in the presence of ozone is designated as a lower limit threshold value and an activation temperature of the EGR catalyst 18 not in the presence of ozone is designated as an upper limit threshold value, is set in advance. When the EGR gas supply operation is being performed and the EGR catalyst temperature is within this set temperature range, the ozone supply operation is performed. On the other hand, when the EGR gas supply operation is not being performed or the EGR catalyst temperature is outside of this set temperature range, the ozone supply operation is prohibited from being performed. This enables the particulate matter to be reliably oxidized and removed while effectively using ozone to oxidize and remove the particulate matter.

That is, as indicated by arrow A in FIG. 3, when the EGR gas supply operation is not being performed and the EGR catalyst temperature TEC is lower than the lower limit threshold value TRL of the set temperature range TR, the ozone supply operation is prohibited from being performed. Next, as indicated by arrow B in FIG. 3, even if the EGR gas supply operation starts to be performed, the ozone supply operation continues to be prohibited from being performed as long as the EGR catalyst temperature TEC is outside of the set temperature range TR. However, at this time the EGR catalyst temperature TEC starts to rise. When the EGR catalyst temperature TEC exceeds the lower limit threshold value TRL of the set temperature range TR such that it falls within the set temperature range TR, as indicated by arrow C in FIG 3, the ozone supply operation starts to be performed. Then, even if the EGR catalyst temperature TEC is within the set temperature range TR, the ozone supply operation also temporarily stops being performed if the EGR gas supply operation temporarily stops being performed, as indicated by arrow D in FIG 3. Then, when the EGR catalyst temperature TEC exceeds the upper limit threshold value TRU of the set temperature range TR such that it falls outside the set temperature range TR, the ozone supply operation stops being performed even if the EGR gas supply operation is being performed.

Therefore, in this example embodiment of the invention, the ozone supply operation is performed when the EGR gas supply operation is being performed and the EGR catalyst temperature TEC is within the set temperature range TR, and is not performed, i.e., prohibited from being performed, when the EGR gas supply operation is not being performed or the EGR catalyst temperature TEC is outside of the set temperature range TR.

When the ozone supply operation is to be performed, the ozone generator 22 is operated while the air control valve 23 is opened. As a result, air flows through the air passage 21 from the intake negative pressure created in the EGR passage 16, and ozone is produced by the ozone generator 22 from the oxygen in the air flowing through the air passage 21 at this time, such that ozone, or oxygen that contains ozone, is supplied into the EGR passage 16 from the air passage 21. Accordingly, a pump or the like is not necessary to force ozone into the EGR passage 16. On the other hand, when the ozone supply operation is to be prohibited, the air control valve 23 is closed.

As described above, the ozone supplied into the EGR passage 16 oxidizes and removes particulate matter in the EGR passage 16 or the EGR catalyst 18. Alternatively, ozone flows into the intake branch pipes 2 via the outflow ends 16e of the EGR passage 16 and oxidizes and removes particulate matter within the intake branch pipes 2 as well. Blow-by gas that flows into the intake branch pipes 2 from the blow-by gas ventilation passage 14 contains lubricating oil and the like which can also be oxidized by ozone. Therefore, if the outflow ends 16e of the EGR passage 16 are arranged inside the intake branch pipes 2 downstream of the outflow ends 14e of the blow-by gas ventilation passage 14, the ozone that flows into the intake branch pipes 2 may be consumed in the process of oxidizing and removing the lubricating oil and the like rather than the particulate matter.

Therefore, in this example embodiment of the invention, the outflow ends 16e of the EGR passage 16 are arranged within the intake branch pipes 2 upstream of the outflow ends 14e of the blow-by gas ventilation passage 14 so that the ozone is effectively used to oxidize and remove the particulate matter.

Also, in this example embodiment of the invention, the inflow end 16i of the EGR passage 16 is connected to the exhaust pipe 11 downstream of the auxiliary catalyst 10 so the amount of particulate matter and the like in the EGR gas that flows into the EGR passage 16 is reduced.

Incidentally, the upper limit threshold value TRU of the set temperature range TR may also be set to the decomposition temperature of ozone (which is approximately 250°C to 300°C). If this is done, the ozone supply operation will be prohibited from being performed when the EGR catalyst temperature TEC is higher than the decomposition temperature of ozone.. Therefore, the ozone can effectively be used to oxidize and remove particulate matter.

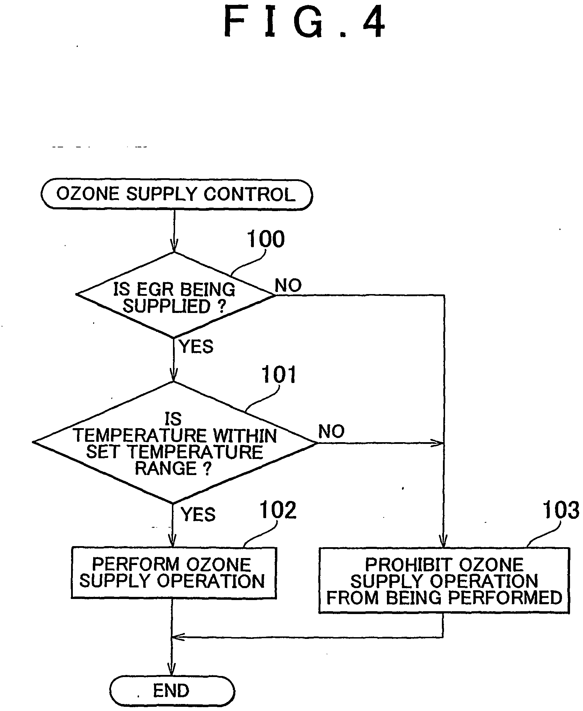

FIG 4 is a flowchart of an ozone supply control routine according to the example embodiment of the invention. This routine is executed at predetermined intervals of time.

Referring to FIG 4, first in step 100, it is determined whether the EGR gas supply operation is being performed. If the EGR gas supply operation is being performed, the process proceeds on to step 101 where it is determined whether the EGR catalyst temperature TEC is within the set temperature range TR. If the EGR catalyst temperature TEC is within the set temperature range TR, the process proceeds on to step 102 where the ozone supply operation is performed. If, on the other hand, the EGR gas supply operation is not being performed or the EGR catalyst temperature TEC is outside of the set temperature range TR, the process proceeds on to step 103 where the ozone supply operation is prohibited from being performed.

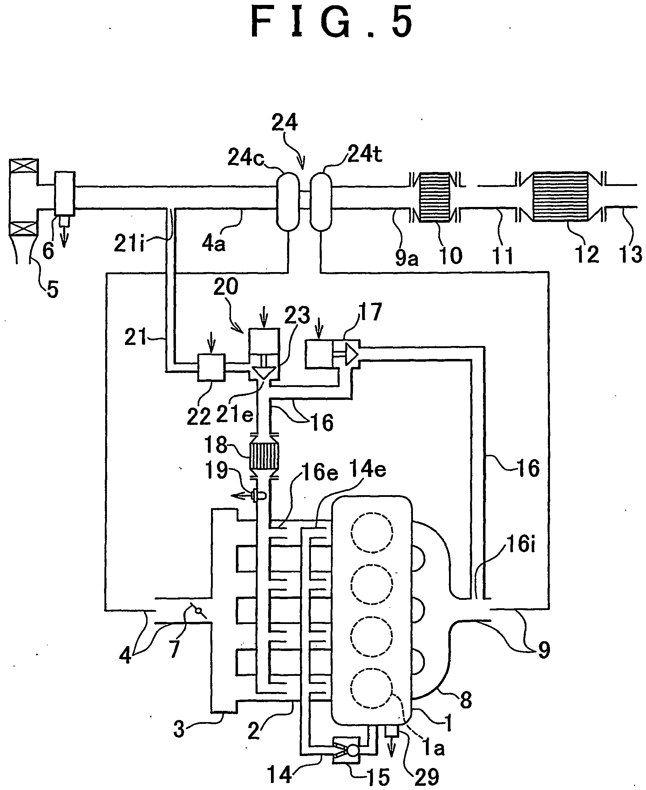

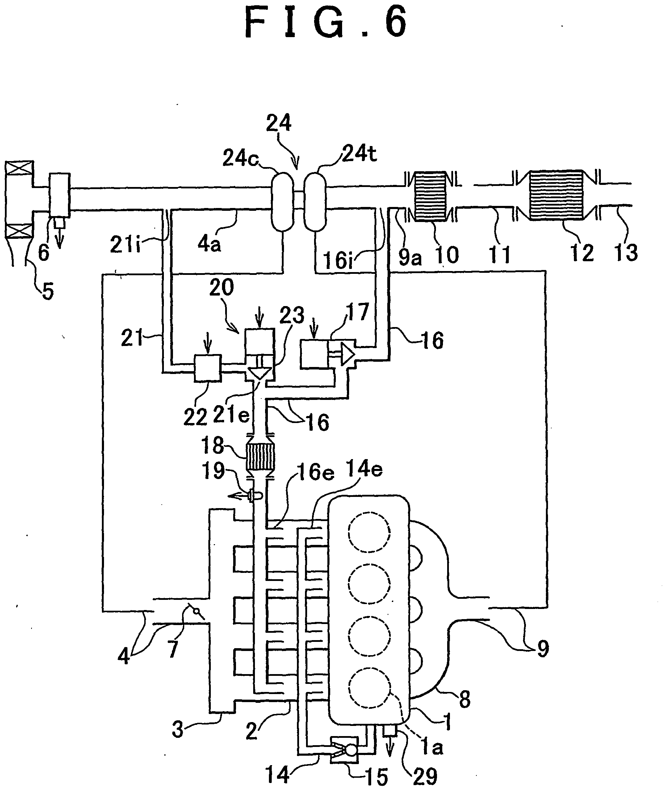

FIGS. 5 and 6 are views showing modified examples of the first example embodiment, in which the internal combustion engine has a turbocharger 24. In these examples, the intake duct 4 is connected to an output port of a compressor 24c of the turbocharger 24, and an input port of the compressor 24c is connected to the air cleaner 5 via the intake pipe 4a. Meanwhile, the exhaust pipe 9 is connected to an input port of a turbine 24t of the turbocharger 24, and an output port of the turbine 24t is connected to the auxiliary catalyst 10 via an exhaust pipe 9a.

In the example shown in FIG 5, the inflow end 16i of the EGR passage 16 is connected to the exhaust pipe 9 upstream of the turbine 24t, which enables a large amount of EGR gas to be supplied with a high exhaust gas pressure.

In contrast, in the examples shown in FIG. 6, the inflow end 16i of the EGR passage 16 is connected to the exhaust pipe 9 downstream of the turbine 24t, which enables the EGR gas temperature to be reduced.

Meanwhile, in both examples, the inflow end 21i of the air passage 21 is connected to the intake pipe 4a. However, the inflow end 21i may also be connected to the intake duct 4.

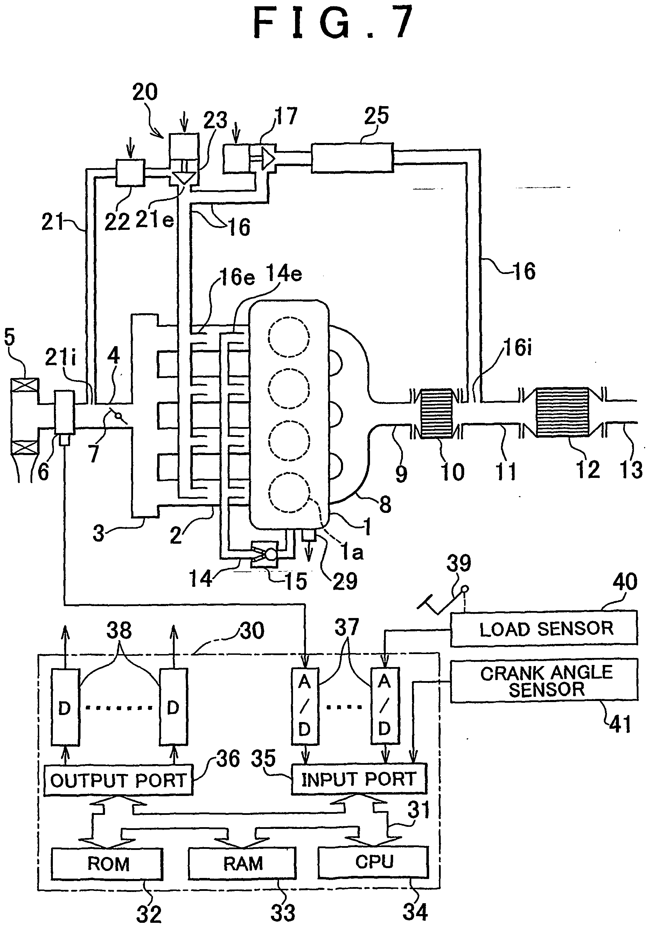

FIG. 7 shows a second example embodiment of the invention.

In this second example embodiment of the invention, an EGR cooler 25 is arranged inside the EGR passage 16 upstream of the EGR control valve 17 and thus the ozone supply end 21e of the ozone supply apparatus 20. EGR gas that flows through the EGR passage 16 is cooled by engine coolant, for example, which is led into the EGR cooler 25. Incidentally, the EGR catalyst 18 and the temperature sensor 19 are omitted in this example embodiment.

When the EGR cooler 25 is provided in this way, the temperature in the EGR passage 16 downstream of the EGR cooler 25 will not exceed the upper limit threshold value TRU of the set temperature range TR described above, nor will it, with the exception of a case in which the temperature of the exhaust gas or EGR gas is extremely low, such as when the engine is warming up, fall below the lower limit threshold value TRL of the set temperature range TR. That is, the temperature in the EGR passage 16 downstream of the EGR cooler 25 is maintained within the set temperature range TR. This obviates the need to monitor the temperature in the EGR passage 16 where ozone is supplied, and thus the need to provide the temperature sensor 19.

Therefore, in the second example embodiment of the invention, the ozone supply operation is performed when the EGR gas supply operation is being performed, and the ozone supply operation is prohibited from being performed when the EGR gas supply operation is not being performed.

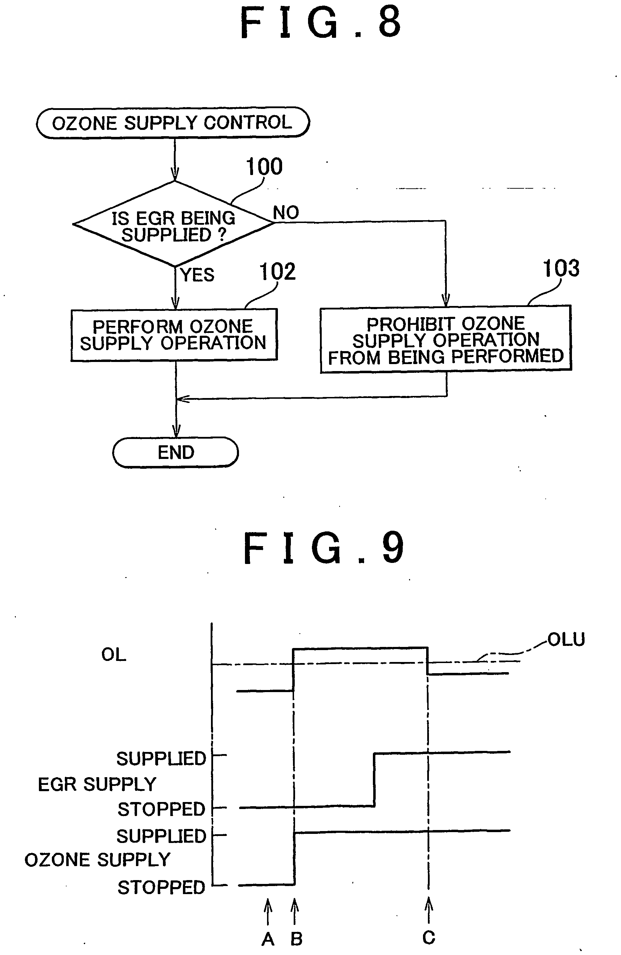

FIG. 8 is a flowchart illustrating an ozone supply control routine according to the second example embodiment of the invention. This routine is also executed at predetermined intervals of time.

Referring to FIG. 8, first in step 100, it is determined whether the EGR gas supply operation is being performed. If the EGR gas supply operation is being performed, the process proceeds on to step 102 where the ozone supply operation is performed. If, on the other hand, the EGR gas supply operation is not being performed, the process proceeds on to step 103 where the ozone supply operation is prohibited from being performed.

The EGR catalyst 18 in the examples shown in FIGS. 1, 5 and 6, and the EGR passage 16 downstream of the EGR cooler 25 shown in FIG 7 may be considered the destination of the ozone supplied from the ozone supply apparatus 20. Therefore, generally speaking, the ozone supply operation is performed when the EGR gas supply operation is being performed and the temperature of the destination of the ozone supplied from the ozone supply apparatus 20 (also referred to as the "ozone supply destination of the ozone supply apparatus 20") is within the set temperature range TR which is set beforehand, and the ozone supply operation is prohibited from being performed when the EGR gas supply operation is not being performed or the temperature of the ozone supply destination of the ozone supply apparatus 20 is outside of the set temperature range TR.

Incidentally, the EGR cooler 25 may also be provided in the examples shown in FIGS. 1, 5, and 6, and the EGR catalyst 18 may also be provided in the example shown in FIG 7.

Next, a third example embodiment of the invention will be described.

The structure of this third example embodiment of the invention differs from the structure of the example embodiments shown in FIGS. 1, 5, 6, and 7 in that the engine main body 1 is provided with a variable valve timing mechanism. This variable valve timing mechanism changes the amount of valve overlap, which is the period of time that the intake valve and the exhaust valve are both open, according to the engine operating state, for example. Hereinafter, an example will be described in which a variable valve timing mechanism is provided in the example embodiment shown in FIG 7.

As the valve overlap amount increases, so too does the amount of burned gas that flows back into the intake branch pipes 2 from the cylinders 1a. This burned gas contains particulate matter so as the valve overlap amount increases, so too does the amount of particulate matter that flows back into the intake branch pipes 2. When a large amount of particulate matter flows back into the intake branch pipes 2, particulate matter may adhere to and accumulate on the inside wall surfaces of the intake branch pipes 2 and the contact surfaces of the intake valves. This can also occur even when the EGR gas supply operation is not being performed.

Therefore, in this third example embodiment of the invention, when the valve overlap amount is greater than an allowable upper limit which is set in advance, the ozone supply operation is performed even if the EGR gas supply operation is not being performed.

That is, as indicated by arrow A in FIG 9, the ozone supply operation is prohibited from being performed when the EGR gas supply operation is not being performed and the valve overlap amount OL is less than the allowable upper limit OLU. Next, as indicated by arrow B in FIG. 9, when the valve overlap amount OL exceeds the allowable limit OLU, the ozone supply operation is performed even if the EGR gas supply operation is not being performed. In this case, the ozone flows out into the intake branch pipes 2 via the EGR passage 16 and oxidizes and removes the particulate matter within the intake branch pipes 2. Then, as indicated by arrow C in FIG 9, even if the valve overlap amount OL becomes less than the allowable upper limit OLU, the EGR gas supply operation is being performed at this time so the ozone supply operation continues to be performed.

Therefore, when this structure is applied to the example embodiments shown in FIGS. 1, 5, and 6, the ozone supply operation may also be performed when the valve overlap amount OL is greater than the allowable upper limit OLU, even if the EGR gas supply operation is not being performed or the temperature of the ozone supply destination is outside of the set temperature range TR.

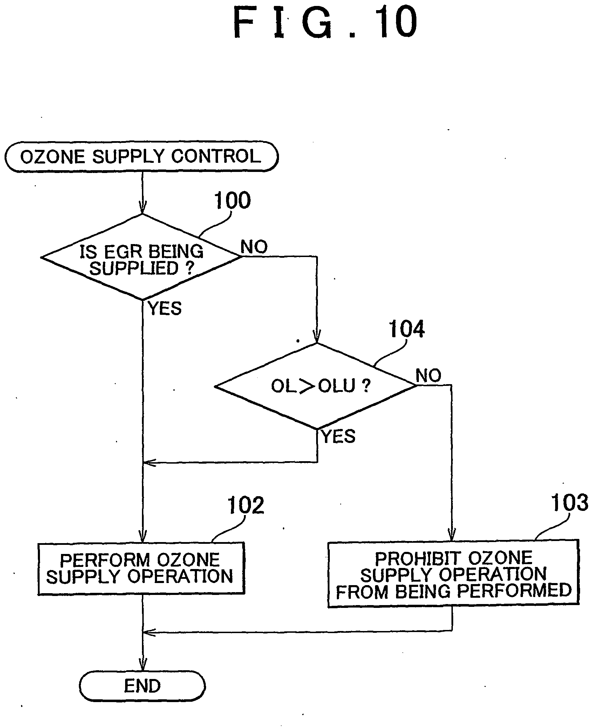

FIG. 10 is a flowchart illustrating an ozone supply control routine according to the third example embodiment of the invention. This routine is also executed at predetermined intervals of time.

Referring to FIG 10, first in step 100, it is determined whether the EGR gas supply operation is being performed. If the EGR gas supply operation is being performed, the process proceeds on to step 102 where the ozone supply operation is performed. If, on the other hand, the EGR gas supply operation is not being performed, the process proceeds on to step 104 where it is determined whether the valve overlap amount OL exceeds the allowable upper limit OLU. If the valve overlap amount OL exceeds the allowable upper limit OLU, i.e., OL > OLU, then the process proceeds on to step 102 where the ozone supply operation is performed. If, on the other hand, the valve overlap amount OL is equal to or less than the allowable upper limit OLU, i.e., $OL \leq OLU$,

then the process proceeds on to step 103 where the ozone supply operation is prohibited from being performed.

Here, the ozone supply control in the ozone supply operation of the example embodiments of the invention will be described.

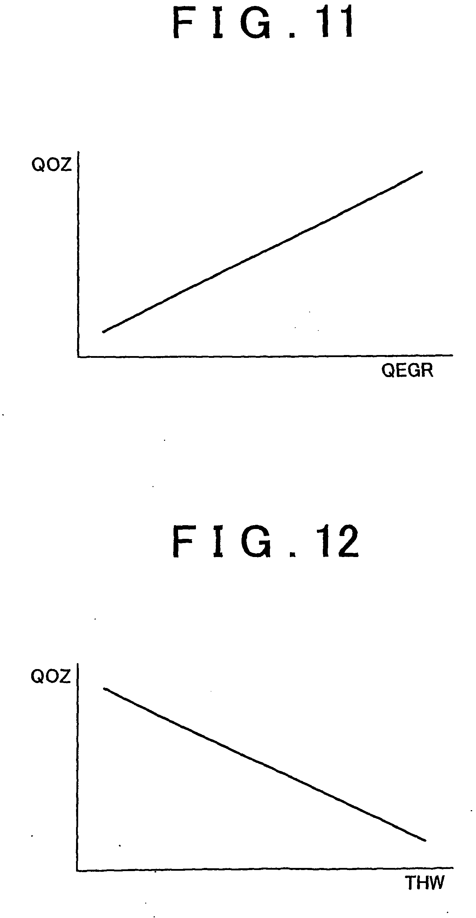

The amount of particulate matter flowing through the EGR passage 16 is greater when the EGR gas amount QEGR is large than it is when the EGR gas amount QEGR is small. Therefore, as shown in FIG. 11, the ozone supply amount QOZ is increased when the EGR gas amount QEGR is large compared to when it is small.

Also, the EGR gas contains more particulate matter when the engine coolant temperature THW is low than it does when the engine coolant temperature THW is high. Therefore, as shown in FIG. 12, the ozone supply amount QOZ is increased when the engine coolant temperature THW is low compared to when it is high.

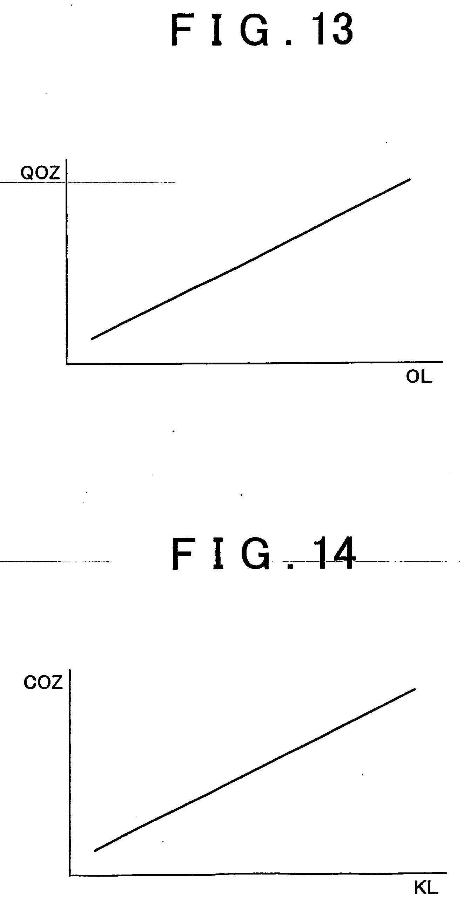

Moreover, in this third example embodiment in which the internal combustion engine has a variable valve timing mechanism, more particulate matter flows back into the intake branch pipes 2 when the valve overlap amount OL is large than when it is small. Therefore, as shown in FIG. 13, the ozone supply amount QOZ is made larger when the valve overlap amount OL is large than it is when the valve overlap amount OL is small.

In this case, the ozone supply amount QOZ can be controlled by controlling one or both of i) the amount of air that flows through the air passage 21 (i.e., the opening amount of the air control valve 23), and ii) the discharge current of the ozone generator 22. In the example embodiments of the invention, the discharge current of the ozone generator 22 is controlled so that the ozone concentration in the air that flows through the air passage 21 is substantially constant, after which the ozone supply amount QOZ is controlled by controlling the amount of air that flows through the air passage 21.

However, the intake negative pressure is lower when the engine load ratio KL is high than it is when the engine load ratio KL is low. Therefore, a large amount of air does not easily flow through the air passage 21 when the engine load ratio KL is high, which makes it difficult to supply a large amount of ozone.

Therefore, as shown in FIG. 14, the ozone concentration COZ in the air that flows through the air passage 21 is made greater when the engine load ratio KL is high than it is when the engine load ratio KL is low. This enables the ozone supply amount QOZ to be increased without having to increase the amount of air that flows out into the EGR passage 16 from the air passage 21.

In the example embodiments of the invention, the throttle opening amount θth is calculated based on the following expression.

$$\theta th = \theta thb \times kth$$

where θthb represents the basic throttle opening amount and kth represents a correction coefficient.

The basic throttle opening amount θthb is used to make the amount of fresh air that is charged into the cylinders 1a match a target fresh air amount, and is set beforehand according to the engine operating state, for example. Meanwhile, the correction coefficient kth (0 < kth ≤ 1) is used to reduce the basic throttle opening amount θth, and is set to 1 when a correction is not needed.

During an ozone supply operation, air containing ozone flows into the intake branch pipes 2 from the air passage 21 via the EGR passage 16 and is charged into the cylinders 1a, as described above. However, this air is charged into the cylinders 1a bypassing the throttle valve 7. Accordingly, during an ozone supply operation, the amount of fresh air or air that is actually charged into the cylinders 1a is more than the amount set according to the throttle opening amount θth. In this case, the additional amount of fresh air that is charged into the cylinders 1a is greater when the amount of air QA flowing into the cylinders 1a through the air passage 21 is large than it is when that amount of air QA is small.

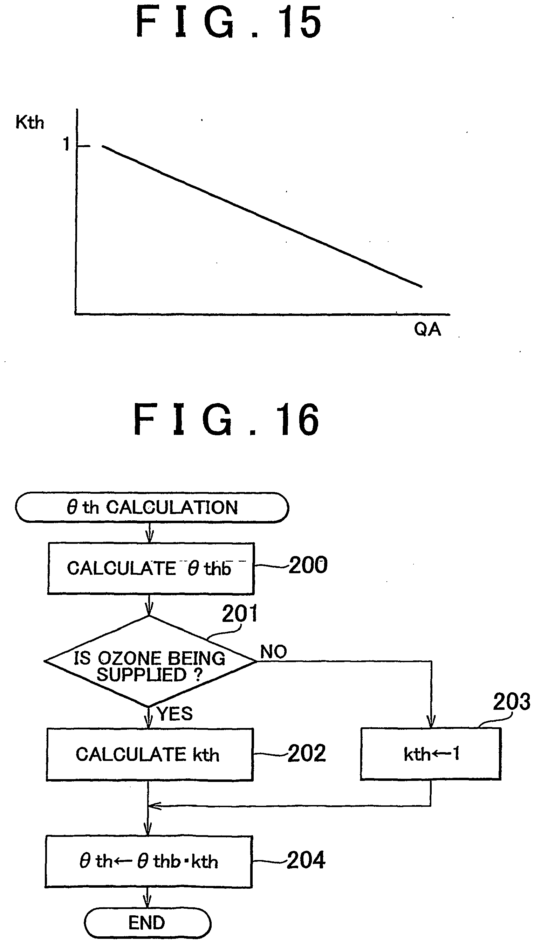

Therefore, in the example embodiments of the invention, during an ozone supply operation, the throttle opening amount θth is controlled based on the amount of air QA that flows into the cylinders 1a through the air passage 21. More specifically, as shown in FIG. 15, a smaller correction coefficient kth is used when the amount of air QA that that flows into the cylinders 1a through the air passage 21 is small than is used when that amount of air QA is large, and a final throttle opening amount θth is obtained by reducing the basic throttle opening amount θthb with this correction coefficient kth. As a result, the amount of fresh air charged into the cylinders 1a can be maintained at the target amount even when the ozone supply operation is being performed.

FIG. 16 is a flowchart illustrating a routine for calculating the throttle opening amount θth in the example embodiments of the invention. This routine is also executed at predetermined intervals of time.

Referring to FIG. 16, first in step 200, the basic throttle opening amount θth is calculated. Next in step 201, it is determined whether the ozone supply operation is being performed. If the ozone supply operation is being performed, the process proceeds on to step 202 where the correction coefficient kth is calculated based on the map shown in FIG. 15, after which the process proceeds on to step 204. If, on the other hand, the ozone supply operation is prohibited from being performed, the process proceeds on to step 203 where the correction coefficient kth is set to 1, after which the process proceeds on to step 204. In step 204, the throttle opening amount θth is calculated (θth = θthb × kth).

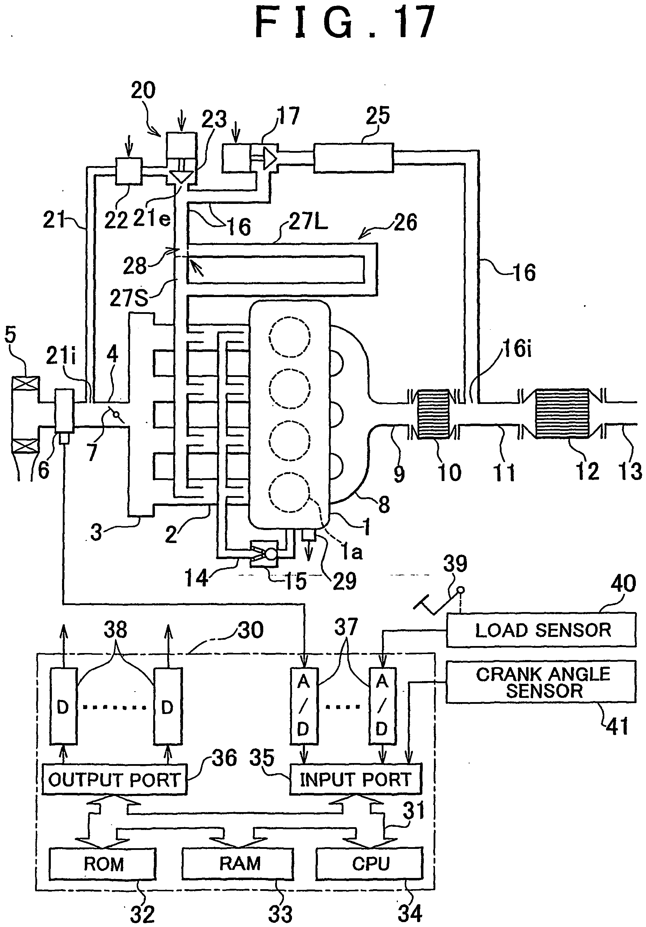

FIG. 17 is a view showing a modified example of the second example embodiment shown in FIG. 7, though the other example embodiments of the invention may also be modified in a similar manner.

Referring to FIG 17, a passage length varying mechanism 26 is provided in the EGR passage 16 downstream of the ozone supply end 21e of the ozone supply apparatus 20. This passage length varying mechanism 26 includes a short passage portion 27S the passage length of which is short, a long passage portion 27L the passage length of which is long, and a passage length control valve 28 that selectively connects the EGR passage 16 with either the short passage portion 27S or the long passage portion 27L.

When the passage length control valve 28 is controlled to the position shown by the solid line in FIG 17, the EGR passage 16 is connected to the short passage portion 27S so the passage length of the EGR passage 16 downstream of the ozone supply end 21e is shortened. On the other hand, when the passage length control valve 28 is controlled to the position shown by the broken line in FIG 17, the EGR passage 16 is connected to the long passage portion 27L so the passage length of the EGR passage 16 downstream of the ozone supply end 21e is lengthened. Incidentally, the passage length control valve 28 is connected to the ECU 30 such that the ECU 30 is able to control the passage length varying mechanism 26.

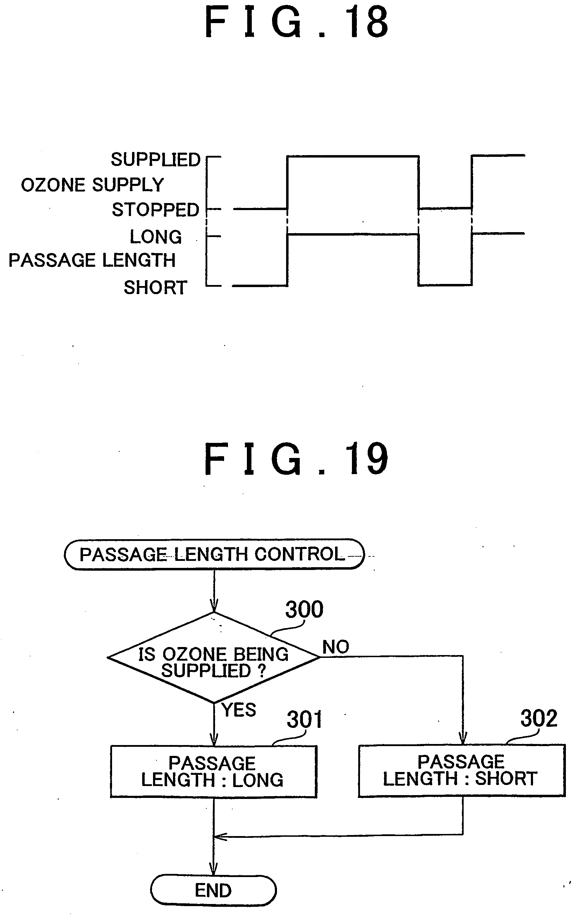

As shown in FIG 18, when the ozone supply operation is not being performed (i.e., is being prohibited from being performed), the length of the EGR passage 16 downstream of the ozone supply end 21e is shortened. As a result, the exhaust pipe 11 and the intake branch pipes 2 are connected over the shortest possible distance, thereby enabling EGR gas to be supplied with good response time.

In contrast, when the ozone supply operation is being performed, the length of the EGR passage 16 downstream of the ozone supply end 21e is increased. As a result, the contact time between the ozone and the particulate matter increases, thus enabling the oxidation and removal of the particulate matter to be promoted. Regarding this, as described above, it is also expected that particulate matter will be oxidized and removed by ozone in the intake branch pipes 2 as well so it is conceivable that the contact time between the ozone and the particulate matter can be increased even when the outflow ends 16e of the EGR passage 16 are connected to the intake duct 4 and the like, for example. However, because fresh air, as well as the air containing ozone and the EGR gas containing particulate matter, flows into the intake duct 4 and the like, the contact frequency between the ozone and the particulate matter is not necessarily high. In contrast, as in the modified example of the second example embodiment, only air containing ozone and EGR gas containing particulate matter flows into the EGR passage 16 downstream of the ozone supply end 21e so the contact time between the ozone and the particulate matter can be increased in a state in which the contact frequency between the ozone and the particulate matter is high. As a result, the oxidation and removal of particulate matter can be reliably promoted.

FIG 19 is a flowchart illustrating a passage length control routine according to the modified example of the second example embodiment. This routine is also executed at predetermined intervals of time.

Referring to FIG. 19, first in step 300 it is determined whether the ozone supply operation is being performed. If the ozone supply operation is being performed, the process proceeds on to step 301 where the EGR passage 16 is connected to the long passage portion 27L. If, on the other hand, the ozone supply operation is prohibited from being performed, the process proceeds on to step 302 where the EGR passage 16 is connected to the short passage portion 27S.

Incidentally, integrally providing the long passage portion 27L with, for example, the cylinder block, the cylinder head, or the head cover, or the like of the engine main body 1 enables the temperature of the long passage portion 27L to be kept high, thereby promoting the oxidation and removal of particulate matter.

In the example embodiments of the invention described above, the ozone supply end 21e of the ozone supply apparatus 20 is connected to the EGR passage 16 downstream of the EGR control valve 17, and ozone is supplied into the EGR passage 16 by intake negative pressure. However, the ozone supply end 21e may also be connected to the EGR passage 16 upstream of the EGR control valve 17 and ozone supplied into the EGR passage 16 by a pump or the like. Also, ozone may also be stored beforehand, and the stored ozone may be supplied into the EGR passage 26.

The ozone supply apparatus 20 may serve as ozone supply means of the present invention and the ECU 30 may serve as ozone supply control means. The ECU 30 and the ozone supply apparatus 30 together may be regarded as ozone amount controlling means and ozone concentration controlling means. Also the ECU 30 and the throttle valve 7 together may be regarded as throttle opening amount controlling means and the ECU 30 and the coolant temperature sensor 29 together may be regarded as engine temperature detecting means. The ECU 30 and the passage length varying mechanism 26 together may be regarded as passage length changing means.

While the invention has been described with reference to example embodiments thereof, it is to be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configurations, including more, less or only a single element, are also within the scope of the invention as defined by the claims.

## Claims

1. An exhaust gas control apparatus for an internal combustion engine which includes an exhaust gas recirculation passage (16) that connects an exhaust passage (11) to an intake passage (4) downstream of a throttle valve (7), and an exhaust gas recirculation control valve (7) which is arranged inside the exhaust gas recirculation passage (16) and controls the amount of exhaust gas recirculation gas that flows into the exhaust gas recirculation passage (16), comprising:

ozone supplying means (20) for supplying ozone into the exhaust gas recirculation passage (16) to oxidize and remove particulate matter; and
ozone supply controlling means (30) for controlling an ozone supply operation performed by the ozone supplying means (20),

**characterized in that**

an EGR-catalyst (18) is arranged in the exhaust gas recirculation passage (16) between the ozone supply controlling means (20) and the intake passage (4),
wherein the ozone supply controlling means (20) performing the ozone supply operation when an exhaust gas recirculation gas supply operation is being performed and the temperature of an ozone supply destination in the exhaust gas recirculation passage (16) of the ozone supplying means (20) being within a set temperature range (TR) that is set in advance, wherein the set temperature range (TR) has a lower limit threshold value (TRL) and an upper limit threshold value (TRU),
wherein the lower limit threshold value (TRL) of the set temperature range (TR) being defined by the activation temperature of the EGR-catalyst (18) in the presence of ozone, and the upper limit threshold value (TRU) of the set temperature range (TR) being defined by the activation temperature of the EGR-catalyst (18) not in the presence of ozone or by an ozone decomposition temperature.

2. An exhaust gas control apparatus for an internal combustion engine which includes an exhaust gas recirculation passage (16) that connects an exhaust passage (11) to an intake passage (4) downstream of a throttle valve (7), and an exhaust gas recirculation control valve (17) which is arranged inside the exhaust gas recirculation passage (16) and controls the amount of exhaust gas recirculation gas that flows into the exhaust gas recirculation passage (16), comprising:

ozone supplying means (20) for supplying ozone into the exhaust gas recirculation passage (16) to oxidize and remove particulate matter; and
ozone supply controlling means (30) for controlling an ozone supply operation performed by the ozone supplying means (20),

**characterized in that**

an inflow end (16i) of the exhaust gas recirculation passage (16) is connected to the exhaust passage (11) downstream of an auxiliary catalyst (10),
wherein the ozone supply controlling means (20) performing the ozone supply operation when an exhaust gas recirculation gas supply operation is being performed and the temperature of an ozone supply destination in the exhaust gas recirculation passage (16) of the ozone supplying means (20) being within a set temperature range (TR) that is set in advance, wherein the set temperature range (TR) has a lower limit threshold value (TRL) and an upper limit threshold value (TRU), and the upper limit threshold value (TRU) of the set temperature range (TR) being defined by an exhaust gas recirculation temperature controlled by an exhaust gas recirculation cooler (25) which cools exhaust gas recirculation gas and is arranged in the exhaust gas recirculation passage (16),
wherein an ozone supply end (21e) of the ozone supplying means (20) is connected to the exhaust gas recirculation passage (16) downstream of the exhaust gas recirculation cooler (25).

3. The exhaust gas control apparatus according to claim 1 or 2, wherein the ozone supply controlling means (30) prohibits the ozone supply operation from being performed when i) the exhaust gas recirculation gas supply operation is not being performed, or ii) the temperature of the ozone supply destination of the ozone supplying means is outside of the set temperature range.

4. The exhaust gas control apparatus according to claim 1 or 3 when dependent on claim 1, wherein said catalyst (18) is an exhaust gas recirculation catalyst (18) which has an oxidative function and is arranged in the exhaust gas recirculation passage (16), wherein an ozone supply end (21e) of the ozone supplying means (20) is connected to the exhaust gas recirculation passage (16) upstream of the exhaust gas recirculation catalyst (18).

5. The exhaust gas control apparatus according to claim 4, wherein the lower limit threshold value (TRL)

of the set temperature range (TRL) is set at an activation temperature of the exhaust gas recirculation catalyst (18) in the presence of ozone, and the upper limit threshold value (TRU) of the set temperature range (TR) is set at an activation temperature of the exhaust gas recirculation catalyst (18) not in the presence of ozone.

6.  The exhaust gas control apparatus according to any one of claims 1 to 5, wherein the upper limit threshold value (TRU) of the set temperature range (TR) is set between 250°C and 300°C, inclusive.

7.  The exhaust gas control apparatus according to any one of claims 1 to 6, wherein the lower limit threshold value (TRL) of the set temperature range (TR) is set between 100°C and 200°C, inclusive.

8.  The exhaust gas control apparatus according to claim 2, wherein the exhaust gas recirculation cooler (25) cools the exhaust gas recirculation gas such that the temperature in the exhaust gas recirculation passage (16), which is the ozone supply destination of the ozone supplying means (20), becomes lower than the upper limit threshold value (TRU).

9.  The exhaust gas control apparatus according to any one of claims 1 to 8, further comprising: a blow-by gas ventilation passage (14) connected to the intake passage (4), wherein an outflow end (16e) of the exhaust gas recirculation passage (16) is connected to the intake passage (4) upstream of an outflow end (14e) of the blow-by ventilation passage (14).

10. The exhaust gas control apparatus according to any one of claims 1 to 9, wherein an ozone supply end (21e) of the ozone supplying means (20) is connected to the exhaust gas recirculation passage (16) downstream of the exhaust gas recirculation control valve (17).

11. The exhaust gas control apparatus according to claim 10, wherein the ozone supplying means (20) includes an air passage (21) that connects the exhaust gas recirculation passage (16) downstream of the exhaust gas recirculation control valve (17) with an air supply, an air control valve (23) which is arranged in the air passage (21) and controls the amount of air that flows through the air passage (21), and an ozone generator (22) which is arranged in the air passage (21) and produces ozone from oxygen in the air in the air passage (21), and when the ozone supply operation is performed by the ozone supplying means (20), the ozone generator (22) is operated while the air control valve (23) is opened, and when the ozone supply operation is prohibited from being performed by the ozone supplying means (20), the air control valve (23) is closed or the ozone generator (22) is stopped.

12. The exhaust gas control apparatus according to claim 11, further comprising: ozone concentration controlling means (30) for controlling an ozone concentration in the air that flows into the exhaust gas recirculation passage (16) from the air passage (21), wherein the ozone concentration controlling means (30) makes the ozone concentration greater when a load of the internal combustion engine is high than when the load of the internal combustion engine is low.

13. The exhaust gas control apparatus according to claim 11 or 12, further comprising: throttle opening amount controlling means (30, 7) for controlling a throttle opening amount based on the amount of air that flows into the exhaust gas recirculation passage (16) from the air passage (21), wherein the air supply is formed of the intake passage (4) upstream of the throttle valve (7).

14. The exhaust gas control apparatus according to any one of claims 1 to 13, further comprising: ozone amount controlling means (30) for controlling the amount of ozone supplied from the ozone supplying means (20), wherein the ozone amount controlling means (30) makes the amount of ozone supplied larger when the amount of exhaust gas recirculation gas is large than when the amount of exhaust gas recirculation gas is small.

15. The exhaust gas control apparatus according to any one of claims 1 to 13, further comprising: ozone amount controlling means (30) for controlling the amount of ozone supplied from the ozone supplying means (20); and engine temperature detecting means (29) for detecting a temperature of the internal combustion engine, wherein the ozone amount controlling means (30) makes the amount of ozone supplied larger when the engine temperature detected by the engine temperature detecting means (29) is high than when engine temperature detected by the engine temperature detecting means (29) is low.

16. The exhaust gas control apparatus according to any one of claims 1 to 15, further comprising: passage length changing means (26) for changing a passage length of the exhaust gas recirculation passage (16) downstream of the ozone supply end (21e) of the ozone supplying means (20), wherein the passage length changing means (26) makes the passage length longer when the ozone supply operation is being performed by the ozone supplying means (20) than when the ozone supply operation is prohibited from being performed by the ozone supplying means (20).

**17.** The exhaust gas control apparatus according to any one of claims 1 to 16, wherein the internal combustion engine includes a catalyst (12) arranged in the exhaust passage (11), and an inflow end (16i) of the exhaust gas recirculation passage (16) is connected to the exhaust passage (11) downstream of the catalyst (12).

**18.** The exhaust gas control apparatus according to any one of claims 1 to 17, wherein the internal combustion engine includes a compressor (24c) of a turbocharger (24) arranged in the exhaust passage (11), and an inflow end (16i) of the exhaust gas recirculation passage (16) is connected to the exhaust passage (11) upstream of the compressor (24c).

**19.** The exhaust gas control apparatus according to any one of claims 1 to 17, wherein the internal combustion engine includes a compressor (24c) of a turbocharger (24) arranged in the exhaust passage (11), and an inflow end (16i) of the exhaust gas recirculation passage (16) is connected to the exhaust passage (11) downstream of the compressor (24c).

**Patentansprüche**

**1.** Abgassteuervorrichtung für einen Verbrennungsmotor, der einen Abgasrezirkulationskanal (16), der einen Abgaskanal (11) mit einem Einlasskanal (4) stromabwärts eines Drosselventils (7) verbindet, und ein Abgasrezirkulationssteuerventil (7) aufweist, das im Inneren des Abgasrezirkulationskanals (16) angeordnet ist und die Menge an Abgasrezirkulationsgas steuert, die in den Abgasrezirkulationskanal (16) strömt, mit:

einer Ozonliefereinrichtung (20) zum Liefern von Ozon in den Abgasrezirkulationskanal (16) zum Oxidieren und Entfernen von Partikulatstoff; und
einer Ozonliefersteuereinrichtung (30) zum Steuern eines Ozonliefervorgangs, der durch die Ozonliefereinrichtung (20) ausgeführt wird,

**dadurch gekennzeichnet, dass**

ein EGR-Katalysator (18) in dem Abgasrezirkulationskanal (16) zwischen der Ozonliefersteuereinrichtung (20) und dem Einlasskanal (4) angeordnet ist,
wobei die Ozonliefersteuereinrichtung (20) den Ozonliefervorgang dann ausführt, wenn ein Abgasrezirkulationsgasliefervorgang ausgeführt wird und die Temperatur eines Ozonlieferbestimmungsortes in dem Abgasrezirkulationskanal (16) der Ozonliefereinrichtung (20) innerhalb eines festgelegten Temperaturbereichs (TR) ist, der zuvor festgelegt worden ist,
wobei der festgelegte Temperaturbereich (TR) einen unteren Grenzwert (TRL) und einen oberen Grenzwert (TRU) hat,
wobei der untere Grenzwert (TRL) des festgelegten Temperaturbereichs (TR) durch die Aktivierungstemperatur des EGR-Katalysators (18) bei Vorhandensein von Ozon definiert ist, und der obere Grenzwert (TRU) des festgelegten Temperaturbereichs (TR) durch die Aktivierungstemperatur des EGR-Katalysators (18) bei Fehlen von Ozon oder durch eine Ozonzersetzungstemperatur definiert ist.

**2.** Abgassteuervorrichtung für einen Verbrennungsmotor, der einen Abgasrezirkulationskanal (16), der einen Abgaskanal (11) mit einem Einlasskanal (4) stromabwärts eines Drosselventils (7) verbindet, und ein Abgasrezirkulationssteuerventil (17) aufweist, das im Inneren des Abgasrezirkulationskanals (16) angeordnet ist und die Menge an Abgasrezirkulationsgas steuert, die in den Abgasrezirkulationskanal (16) strömt, mit:

einer Ozonliefereinrichtung (20) zum Liefern von Ozon in den Abgasrezirkulationskanal (16) zum Oxidieren und Entfernen von Partikulatstoff; und
einer Ozonliefersteuereinrichtung (30) zum Steuern eines Ozonliefervorgangs, der durch die Ozonliefereinrichtung (20) ausgeführt wird,

**dadurch gekennzeichnet, dass**

ein Einströmende (16i) des Abgasrezirkulationskanals (16) mit dem Abgaskanal (11) stromabwärts eines Hilfskatalysators (10) verbunden ist,
wobei die Ozonliefersteuereinrichtung (20) den Ozonliefervorgang dann ausführt, wenn ein Abgasrezirkulationsgasliefervorgang ausgeführt wird und die Temperatur eines Ozonlieferbestimmungsortes in dem Abgasrezirkulationskanal (16) der Ozonliefereinrichtung (20) innerhalb eines festgelegten Temperaturbereichs (TR) ist, der zuvor festgelegt worden ist,
wobei der festgelegte Temperaturbereich (TR) einen unteren Grenzwert (TRL) und einen oberen Grenzwert (TRU) hat, und der obere Grenzwert (TRU) des festgelegten Temperaturbereichs (TR) durch eine Abgasrezirkulationstemperatur definiert ist, die durch einen Abgasrezirkulationskühler (25) gesteuert wird, der das Abgasrezirkulationsgas kühlt und in dem Abgasrezirkulationskanal (16) angeordnet ist,
wobei ein Ozonlieferende (21e) der Ozonliefereinrichtung (20) mit dem Abgasrezirkulationskanal (16) stromabwärts des Abgasrezirkulations-

kühlers (25) verbunden ist.

**3.** Abgassteuervorrichtung gemäß Anspruch 1 oder 2, wobei die Ozonliefersteuereinrichtung (30) das Ausführen des Ozonliefervorgangs verhindert, wenn i) der Abgasrezirkulationsgasliefervorgang nicht ausgeführt wird, oder ii) die Temperatur des Ozonlieferbestimmungsortes der Ozonliefereinrichtung außerhalb des festgelegten Temperaturbereichs ist.

**4.** Abgassteuervorrichtung gemäß Anspruch 1 oder 3, wenn dieser von Anspruch 1 abhängig ist, wobei der Katalysator (18) ein Abgasrezirkulationskatalysator (18) ist, der eine oxidierende Funktion hat und in dem Abgasrezirkulationskanal (16) angeordnet ist, wobei ein Ozonlieferende (21e) der Ozonliefereinrichtung (20) mit dem Abgasrezirkulationskanal (16) stromaufwärts des Abgasrezirkulationskatalysators (18) verbunden ist.

**5.** Abgassteuervorrichtung gemäß Anspruch 4, wobei der untere Grenzwert (TRL) des festgelegten Temperaturbereichs (TRL) auf eine Aktivierungstemperatur des Abgasrezirkulationskatalysators (18) bei Vorhandensein von Ozon festgelegt ist, und der obere Grenzwert (TRU) des festgelegten Temperaturbereichs (TR) auf eine Aktivierungstemperatur des Abgasrezirkulationskatalysators (18) bei Fehlen von Ozon festgelegt ist.

**6.** Abgassteuervorrichtung gemäß einem der Ansprüche 1 bis 5, wobei der obere Grenzwert (TRU) des festgelegten Temperaturbereichs (TR) zwischen 250°C und 300°C inklusive festgelegt ist.

**7.** Abgassteuervorrichtung gemäß einem der Ansprüche 1 bis 6, wobei der untere Grenzwert (TRL) des festgelegten Temperaturbereichs (TR) zwischen 100°C und 200°C inklusive festgelegt ist.

**8.** Abgassteuervorrichtung gemäß Anspruch 2, wobei der Abgasrezirkulationskühler (25) das Abgasrezirkulationsgas derart kühlt, dass die Temperatur in dem Abgasrezirkulationskanal (16), der der Ozonlieferbestimmungsort der Ozonliefereinrichtung (20) ist, niedriger als der obere Grenzwert (TRU) wird.

**9.** Abgassteuervorrichtung gemäß einem der Ansprüche 1 bis 8, die des Weiteren Folgendes aufweist: einen Umgehungsgasbelieferungskanal (14), der mit dem Einlasskanal (4) verbunden ist, wobei ein Ausströmende (16e) des Abgasrezirkulationskanals (16) mit dem Einlasskanal (4) stromaufwärts eines Ausströmendes (14e) des Umgehungsgasbelieferungskanals (14) verbunden ist.

**10.** Abgassteuervorrichtung gemäß einem der Ansprüche 1 bis 9, wobei ein Ozonlieferende (21e) der Ozonliefereinrichtung (20) mit dem Abgasrezirkulationskanal (16) stromabwärts des Abgasrezirkulationssteuerventils (17) verbunden ist.

**11.** Abgassteuervorrichtung gemäß Anspruch 10, wobei die Ozonliefereinrichtung (20) einen Luftkanal (21), der den Abgasrezirkulationskanal (16) stromabwärtig des Abgasrezirkulationssteuerventils (17) mit einer Luftversorgung verbindet, ein Luftsteuerventil (23), das in dem Luftkanal (21) angeordnet ist und die Menge der Luft steuert, die durch den Luftkanal (21) strömt, und einen Ozongenerator (22) aufweist, der in dem Luftkanal (21) angeordnet ist und Ozon aus in der Luft in dem Luftkanal (21) enthaltenem Sauerstoff erzeugt, und wenn der Ozonliefervorgang durch die Ozonliefereinrichtung (20) ausgeführt wird, der Ozongenerator (22) betrieben wird, während das Luftsteuerventil (23) geöffnet ist, und wenn das Ausführen des Ozonliefervorgangs durch die Ozonliefereinrichtung (20) verhindert ist, das Luftsteuerventil (23) geschlossen ist oder der Ozongenerator (22) angehalten ist.

**12.** Abgassteuervorrichtung gemäß Anspruch 11, die des Weiteren Folgendes aufweist: eine Ozonkonzentrationssteuereinrichtung (30) zum Steuern einer Ozonkonzentration in der Luft, die in den Abgasrezirkulationskanal (16) von dem Luftkanal (21) strömt, wobei die Ozonkonzentrationssteuereinrichtung (30) die Ozonkonzentration größer gestaltet, wenn eine Last des Verbrennungsmotors hoch ist, als dann, wenn die Last des Verbrennungsmotors gering ist.

**13.** Abgassteuervorrichtung gemäß Anspruch 11 oder 12, die des Weiteren Folgendes aufweist: eine Drosselöffnungsbetragsteuereinrichtung (30, 7) zum Steuern eines Drosselöffnungsbetrags auf der Grundlage einer Menge der Luft, die in den Abgasrezirkulationskanal (16) von dem Luftkanal (21) strömt, wobei die Luftversorgung aus dem Einlasskanal (4) stromaufwärts des Drosselventils (7) ausgebildet ist.

**14.** Abgassteuervorrichtung gemäß einem der Ansprüche 1 bis 13, die des Weiteren Folgendes aufweist: eine Ozonmengensteuereinrichtung (30) zum Steuern der Menge an Ozon, die von der Ozonliefereinrichtung (20) geliefert wird, wobei die Ozonmengensteuereinrichtung (30) die Menge an Ozon, die geliefert wird, größer gestaltet, wenn die Menge an Abgasrezirkulationsgas hoch ist, als dann, wenn die Menge an Abgasrezirkulationsgas gering ist.

**15.** Abgassteuervorrichtung gemäß einem der Ansprüche 1 bis 13, die des Weiteren Folgendes aufweist: eine Ozonmengensteuereinrichtung (30) zum Steuern der Menge an Ozon, die von der Ozonliefereinrichtung (20) geliefert wird, wobei die Ozonmengensteuereinrichtung (30) die Menge an Ozon, die von der Ozonliefereinrichtung (20) geliefert wird, größer gestaltet, wenn die Menge an Ab-

richtung (20) geliefert wird; und eine Verbrennungsmotortemperaturerfassungseinrichtung (29) zum Erfassen einer Temperatur des Verbrennungsmotors, wobei die Ozonmengensteuereinrichtung (30) die Menge an Ozon, die geliefert wird, größer gestaltet, wenn die durch die Verbrennungsmotortemperaturerfassungseinrichtung (29) erfasste Verbrennungsmotortemperatur hoch ist, als dann, wenn die durch die Verbrennungsmotortemperaturerfassungseinrichtung (29) erfasste Verbrennungsmotortemperatur gering ist.

16. Abgassteuervorrichtung gemäß einem der Ansprüche 1 bis 15, die des Weiteren Folgendes aufweist: eine Kanallängenänderungseinrichtung (26) zum Ändern einer Kanallänge des Abgasrezirkulationskanals (16) stromabwärts des Ozonlieferendes (21e) der Ozonliefereinrichtung (20), wobei die Kanallängenänderungseinrichtung (26) die Kanallänge länger gestaltet, wenn der Ozonliefervorgang durch die Ozonliefereinrichtung (20) ausgeführt wird, als dann, wenn das Ausführen des Ozonliefervorgangs durch die Ozonliefereinrichtung (20) verhindert ist.

17. Abgassteuervorrichtung gemäß einem der Ansprüche 1 bis 16, wobei der Verbrennungsmotor einen Katalysator (12), der in dem Abgaskanal (11) angeordnet ist, aufweist und ein Einströmende (16i) des Abgasrezirkulationskanals (16) mit dem Abgaskanal (11) stromabwärts des Katalysators (12) verbunden ist.

18. Abgassteuervorrichtung gemäß einem der Ansprüche 1 bis 17, wobei der Verbrennungsmotor einen Kompressor (24c) eines Turboladers (24) aufweist, der in dem Abgaskanal (11) angeordnet ist, und ein Einströmende (16i) des Abgasrezirkulationskanals (16) mit dem Abgaskanal (11) stromaufwärts des Kompressors (24c) verbunden ist.

19. Abgassteuervorrichtung gemäß einem der Ansprüche 1 bis 17, wobei der Verbrennungsmotor einen Kompressor (24c) eines Turboladers (24) aufweist, der in dem Abgaskanal (11) angeordnet ist, und ein Einströmende (16i) des Abgasrezirkulationskanals (16) mit dem Abgaskanal (11) stromabwärts des Kompressors (24c) verbunden ist.

## Revendications

1. Appareil de commande de gaz d'échappement pour un moteur à combustion interne qui comprend un passage de recirculation de gaz d'échappement (16) qui raccorde un passage d'échappement (11) à un passage d'admission (4) en aval d'un papillon des gaz (7) et une soupape de commande de recirculation de gaz d'échappement (17) qui est agencée à l'intérieur du passage de recirculation de gaz d'échappement (16) et commande la quantité de gaz de recirculation de gaz d'échappement qui s'écoule dans le passage de recirculation de gaz d'échappement (16), comprenant :

des moyens d'alimentation d'ozone (20) pour fournir de l'ozone dans le passage de recirculation de gaz d'échappement (16) pour oxyder et retirer les matières particulaires ; et des moyens de commande d'alimentation d'ozone (30) pour commander une opération d'alimentation d'ozone réalisée par les moyens d'alimentation d'ozone (20),

**caractérisé en ce que** :

un catalyseur EGR (18) est agencé dans le passage de recirculation de gaz d'échappement (16) entre les moyens de commande d'alimentation d'ozone (20) et le passage d'admission (4),
dans lequel les moyens de commande d'alimentation d'ozone (20) réalisent l'opération d'alimentation d'ozone lorsqu'une opération d'alimentation de gaz de recirculation de gaz d'échappement est réalisée et que la température d'une destination d'alimentation d'ozone dans le passage de recirculation de gaz d'échappement (16) des moyens d'alimentation d'ozone (20) est dans une plage de température déterminée (TR) qui est réglée à l'avance,
dans lequel la plage de température déterminée (TR) a une valeur de seuil de limite inférieure (TR) et une valeur de seuil de limite supérieure (TRU),
dans lequel la valeur de seuil de limite inférieure (TRL) est la plage de température déterminée (TR) qui est définie par la température d'activation du catalyseur EGR (18) en présence de l'ozone, et la valeur de seuil de limite supérieure (TRU) de la plage de température déterminée (TR) est définie par la température d'activation du catalyseur EGR (18) en l'absence d'ozone ou par une température de décomposition d'ozone.

2. Appareil de commande de gaz d'échappement pour un moteur à combustion interne qui comprend un passage de recirculation de gaz d'échappement (16) qui raccorde un passage d'échappement (11) à un passage d'admission (4) en aval d'un papillon des gaz (7) et une soupape de commande de recirculation de gaz d'échappement (17) qui est agencée à l'intérieur du passage de recirculation de gaz d'échappement (16) et commande la quantité de gaz de recirculation de gaz d'échappement qui s'écoule dans le passage de recirculation de gaz d'échappement (16), comprenant :

des moyens d'alimentation d'ozone (20) pour fournir de l'ozone dans le passage de recirculation de gaz d'échappement (16) pour oxyder et retirer les matières partenaires ; et des moyens de commande d'alimentation d'ozone (30) pour commander une opération d'alimentation d'ozone réalisée par les moyens d'alimentation d'ozone (20),
**caractérisé en ce que** :

une extrémité d'entrée (16i) du passage de recirculation de gaz d'échappement (16) est raccordée au passage d'échappement (11) en aval d'un catalyseur auxiliaire (10), dans lequel les moyens de commande d'alimentation d'ozone (20) réalisent l'opération d'alimentation d'ozone lorsqu'une opération d'alimentation de gaz de recirculation de gaz d'échappement est réalisée et que la température d'une destination d'alimentation d'ozone dans le passage de recirculation de gaz d'échappement (16) des moyens d'alimentation d'ozone (20) est dans une plage de température déterminée (TR) qui est réglée à l'avance, dans lequel la plage de température déterminée (TR) a une valeur de seuil de limite inférieure (TRL) et une valeur de seuil de limite supérieure (TRU), et la valeur de seuil de limite supérieure (TRU) de la plage de température déterminée (TR) est définie par une température de recirculation de gaz d'échappement commandée par un refroidisseur de recirculation de gaz d'échappement (25) qui refroidit le gaz de recirculation de gaz d'échappement et est agencé dans le passage de recirculation de gaz d'échappement (16), dans lequel une extrémité d'alimentation d'ozone (21e) des moyens d'alimentation d'ozone (20) est raccordée au passage de recirculation de gaz d'échappement (16) en aval du refroidisseur de recirculation de gaz d'échappement (25).

3. Appareil de commande de gaz d'échappement selon la revendication 1 ou 2, dans lequel les moyens de commande d'alimentation d'ozone (30) empêchent la réalisation de l'opération d'alimentation d'ozone lorsque i) l'opération d'alimentation de gaz de recirculation de gaz d'échappement n'est pas réalisée, ou bien lorsque ii) la température de la destination d'alimentation d'ozone des moyens d'alimentation d'ozone est hors de la plage de température déterminée.

4. Appareil de commande de gaz d'échappement selon la revendication 1 ou 3 lorsqu'elle dépend de la revendication 1, dans lequel ledit catalyseur (18) est un catalyseur de recirculation de gaz d'échappement (18) qui a une fonction oxydante et est agencé dans le passage de recirculation de gaz d'échappement (16), dans lequel une extrémité d'alimentation d'ozone (21e) des moyens d'alimentation d'ozone (20) est raccordée au passage de recirculation de gaz d'échappement (16) en amont du catalyseur de recirculation de gaz d'échappement (18).

5. Appareil de commande de gaz d'échappement selon la revendication 4, dans lequel la valeur de seuil de limite inférieure (TRL) de la plage de température déterminée (TRL) est réglée à une température d'activation du catalyseur de recirculation de gaz d'échappement (18) en présence d'ozone, et la valeur de seuil de limite supérieure (TRU) de la plage de température déterminée (TR) est réglée à une température d'activation du catalyseur de recirculation de gaz d'échappement (18) en l'absence d'ozone.

6. Appareil de commande de gaz d'échappement selon l'une quelconque des revendications 1 à 5, dans lequel la valeur de seuil de limite supérieure (TRU) de la plage de température déterminée (TR) est comprise entre 250°C et 300°C y compris.

7. Appareil de commande de gaz d'échappement selon l'une quelconque des revendications 1 à 6, dans lequel la valeur de seuil de limite inférieure (TRL) de la plage de température déterminée (TRL) est comprise entre 100°C et 200°C y compris.

8. Appareil de commande de gaz d'échappement selon la revendication 2, dans lequel le refroidisseur de recirculation de gaz d'échappement (25) refroidit le gaz de recirculation de gaz d'échappement de sorte que la température dans le passage de recirculation de gaz d'échappement (16), qui est la destination d'alimentation d'ozone des moyens d'alimentation d'ozone (20), devient inférieure à la valeur de seuil de limite supérieure (TRU).

9. Appareil de commande de gaz d'échappement selon l'une quelconque des revendications 1 à 8, comprenant en outre : un passage de ventilation de fuite de gaz (14) raccordé au passage d'admission (4), dans lequel une extrémité de sortie (16e) du passage de recirculation de gaz d'échappement (16) est raccordée au passage d'admission (4) en amont d'une extrémité de sortie (14e) du passage de ventilation de fuite de gaz (14).

**10.** Appareil de commande de gaz d'échappement selon l'une quelconque des revendications 1 à 9, dans lequel une extrémité d'alimentation d'ozone (21e) des moyens d'alimentation d'ozone (20) est raccordée au passage de recirculation de gaz d'échappement (16) en aval de la soupape de commande de recirculation de gaz d'échappement (17).

**11.** Appareil de commande de gaz d'échappement selon la revendication 10, dans lequel les moyens d'alimentation d'ozone (20) comprennent un passage d'air (21) qui raccorde le passage de recirculation de gaz d'échappement (16) en aval de la soupape de commande de recirculation de gaz d'échappement (17) avec une alimentation d'air, une soupape de commande d'air (23) qui est agencée dans le passage d'air (21) et commande la quantité d'air qui s'écoule dans le passage d'air (21) et un générateur d'ozone (22) qui est agencé dans le passage d'air (21) et produit de l'ozone à partir d'oxygène dans l'air dans le passage d'air (21) et lorsque l'opération d'alimentation d'ozone est réalisée par les moyens d'alimentation d'ozone (20), le générateur d'ozone (22) est actionné alors que la soupape de commande d'air (23) est ouverte et lorsque l'on empêche la réalisation de l'opération d'alimentation d'ozone par les moyens d'alimentation d'ozone (20), la soupape de commande d'air (23) est fermée ou bien le générateur d'ozone (22) est arrêté.

**12.** Appareil de commande de gaz d'échappement selon la revendication 11, comprenant en outre : des moyens de commande de concentration d'ozone (30) pour commander une concentration d'ozone dans l'air qui s'écoule dans le passage de recirculation de gaz d'échappement (16) à partir du passage d'air (21), dans lequel les moyens de commande de concentration d'ozone (30) rend la concentration d'ozone plus importante lorsqu'une charge du moteur à combustion interne est élevée que lorsque la charge du moteur à combustion interne est faible.

**13.** Appareil de commande de gaz d'échappement selon la revendication 11 ou 12, comprenant en outre : des moyens de commande de quantité d'ouverture de papillon des gaz (30, 7) pour commander une quantité d'ouverture de papillon des gaz en fonction de la quantité d'air qui s'écoule dans le passage de recirculation de gaz d'échappement (16) à partir du passage d'air (21), dans lequel l'alimentation d'air est composée du passage d'admission (4) en amont du papillon des gaz ((7).

**14.** Appareil de commande de gaz d'échappement selon l'une quelconque des revendications 1 à 13, comprenant en outre : des moyens de commande de quantité d'ozone (30) pour commander la quantité d'ozone fournie par les moyens d'alimentation d'ozone (20), dans lequel les moyens de commande de quantité d'ozone (30) rendent la quantité d'ozone fournie plus importante lorsque la quantité de gaz de recirculation de gaz d'échappement est importante que lorsque la quantité de gaz de circulation de gaz d'échappement est faible.

**15.** Appareil de commande de gaz d'échappement selon l'une quelconque des revendications 1 à 13, comprenant en outre : des moyens de commande de quantité d'ozone (30) pour commander la quantité d'ozone fournie par les moyens d'alimentation d'ozone (20) ; et des moyens de détection de température de moteur (29) pour détecter une température du moteur à combustion interne, dans lequel les moyens de commande de quantité d'ozone (30) rendent la quantité d'ozone fournie plus importante lorsque la température de moteur détectée par les moyens de détection de température de moteur (29) est élevée que lorsque la température de moteur détectée par les moyens de détection de température de moteur (29) est basse.

**16.** Appareil de commande de gaz d'échappement selon l'une quelconque des revendications 1 à 15, comprenant en outre : des moyens de changement de longueur de passage (26) pour changer une longueur de passage du passage de recirculation de gaz d'échappement (16) en aval de l'extrémité d'alimentation d'ozone (21e) des moyens d'alimentation d'ozone (20), dans lequel les moyens de changement de longueur de passage (26) rendent la longueur de passage plus longue lorsque l'opération d'alimentation d'ozone est réalisée par les moyens d'alimentation d'ozone (20) que lorsque la réalisation de l'opération d'alimentation d'ozone est empêchée par les moyens d'alimentation d'ozone (20).

**17.** Appareil de commande de gaz d'échappement selon l'une quelconque des revendications 1 à 16, dans lequel le moteur à combustion interne comprend un catalyseur (12) agencé dans le passage d'échappement (11) et une extrémité d'entrée (16i) du passage de recirculation de gaz d'échappement (16) est raccordée au passage d'échappement (11) en aval du catalyseur (12).

**18.** Appareil de commande de gaz d'échappement selon l'une quelconque des revendications 1 à 17, dans lequel le moteur à combustion interne comprend un compresseur (24c) d'un turbocompresseur (24) agencé dans le passage d'échappement (11), et une extrémité d'entrée (16i) du passage de recirculation de gaz d'échappement (16) est raccordée au passage d'échappement (11) en amont du compresseur (24c).

**19.** Appareil de commande de gaz d'échappement selon l'une quelconque des revendications 1 à 17, dans lequel le moteur à combustion interne comprend un compresseur (24c) d'un turbocompresseur (24) agencé dans le passage d'échappement (11), et une extrémité d'entrée (16i) du passage de recirculation de gaz d'échappement (16) est raccordée au passage d'échappement (11) en aval du compresseur (24c).

# FIG.1

# FIG. 2

# FIG. 3

# F I G . 4

OZONE SUPPLY CONTROL

100

IS EGR BEING SUPPLIED ? — NO

YES

101

IS TEMPERATURE WITHIN SET TEMPERATURE RANGE ? — NO

YES 102

PERFORM OZONE SUPPLY OPERATION

103

PROHIBIT OZONE SUPPLY OPERATION FROM BEING PERFORMED

END

# FIG.5

# F I G . 6

# FIG.7

# FIG.8

OZONE SUPPLY CONTROL

100
IS EGR BEING SUPPLIED ?

NO

YES 102

PERFORM OZONE SUPPLY OPERATION

103

PROHIBIT OZONE SUPPLY OPERATION FROM BEING PERFORMED

END

# FIG.9

OL

OLU

SUPPLIED
EGR SUPPLY
STOPPED

SUPPLIED
OZONE SUPPLY
STOPPED

A B

C

# F I G . 10

```
        ( OZONE SUPPLY CONTROL )
                    │
                    │         100
                    ▼
              ╱───────────╲      NO
             ╱ IS EGR BEING ╲──────────────┐
             ╲  SUPPLIED ?  ╱               │
              ╲───────────╱                 │
                    │                       │
                   YES                      ▼          104
                    │                  ╱───────────╲
                    │                 ╱             ╲    NO
                    │                ╲   OL>OLU ?   ╱──────────┐
                    │                 ╲             ╱          │
                    │                  ╲───────────╱           │
                    │                      YES                 │
                    │◄──────────────────────┘                  │
                    │                                          │
          102       │                                103       │
                    ▼                                          ▼
          ┌──────────────────┐              ┌──────────────────────┐
          │  PERFORM OZONE   │              │   PROHIBIT OZONE     │
          │ SUPPLY OPERATION │              │  SUPPLY OPERATION    │
          └──────────────────┘              │ FROM BEING PERFORMED │
                    │                        └──────────────────────┘
                    │◄──────────────────────────────────┘
                    ▼
              (   END   )
```

# F I G . 11

# F I G . 12

# F I G . 13

QOZ

OL

# F I G . 14

COZ

KL

# F I G . 15

# F I G . 16

# FIG.17

# F I G . 18

```
         SUPPLIED ┌──────────┐          ┌──────
    OZONE SUPPLY  │          │          │
          STOPPED ├──────────┘          └──────
             LONG ├─────────┐          ┌────────
  PASSAGE LENGTH  │         │          │
            SHORT └─────────┘          └────────
```

# F I G . 19

```
        ┌──────────────────────────────┐
        │   PASSAGE LENGTH CONTROL      │
        └──────────────┬───────────────┘
                       │
                       ▼              300
                      ╱ ╲
                     ╱   ╲       NO
               ╱ IS OZONE BEING ╲────────────────────┐
               ╲   SUPPLIED ?   ╱                     │
                    ╲   ╱                             │
                     ╲ ╱                              │
                   YES │        301                   │        302
                       ▼                              ▼
        ┌──────────────────────┐          ┌──────────────────────┐
        │       PASSAGE        │          │       PASSAGE        │
        │   LENGTH : LONG      │          │   LENGTH : SHORT     │
        └──────────┬───────────┘          └──────────┬───────────┘
                   │                                  │
                   │◄─────────────────────────────────┘
                   ▼
            ┌──────────────┐
            │     END      │
            └──────────────┘
```

**EP 2 238 336 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 20071203971 B
- JP 2007120397 A